# EUROPÄISCHE PATENTSCHRIFT

(11) **EP 2 558 287 B1**
(45) Veröffentlichungstag und Bekanntmachung des Hinweises auf die Patenterteilung: **03.09.2014**
(21) Anmeldenummer: 11718910.0
(22) Anmeldetag: 15.03.2011
(51) Int. Cl.: B32B 7/04, B32B 37/00, F16L 58/00, F16L 59/20, F16L 13/02, B32B 1/08, B32B 27/08, B32B 27/40, B32B 27/32, F16L 58/18

(54) **OFFSHORE- ISOLATIONSELEMENT FÜR ÖL- ODER GASPIPELINES UND VERFAHREN ZU DESSEN HERSTELLUNG**
OFFSHORE INSULATING ELEMENT FOR OIL AND GAS PIPELINES AND METHOD FOR PRODUCING SAME
ÉLÉMENT ISOLANT POUR INSTALLATION EN MER POUR DES PIPELINES DE PÉTROLE OU DE GAZ ET PROCÉDÉ DE FABRICATION CORRESPONDANT

(30) Priorität: 12.04.2010 DE 102010014835
(43) Veröffentlichungstag der Anmeldung: 20.02.2013
(73) Patentinhaber: Silicoat Robotics GmbH, 07745 Jena (DE)
(72) Erfinder: CIHAR, Roman, 07745 Jena (DE)
(74) Vertreter: Donath, Dirk
(86) Internationale Anmeldenummer: PCT/DE2011/000270
(87) Internationale Veröffentlichungsnummer: WO 2011/127884

(56) Entgegenhaltungen:
- EP-A1- 0 622 181
- DE-A1- 19 915 311
- DE-A1-102005 040 735

## Beschreibung

Die Erfindung betrifft ein Offshore- Isolationselement für Öl- oder Gaspipelines und ein Verfahren zu dessen Herstellung.

Als Offshore- Pipelines werden Leitungen bezeichnet, deren Großteil unter Wasser auf dem Meeresboden verläuft. Derartige Pipeline Systeme erfordern einen extrem hohen Investitionsgrad und stellen für die Versorgung ganzer Industrienationen in vielen Fällen das eigentliche Schlüsselelement dar. Um einen störfreien, dauerhaften und vor allem Kosten effizienten Betrieb dieser Systeme überhaupt zu gewährleisten, erfordert es einen hohen Grad an spezifischem "know how" in unterschiedlichsten technischen Bereichen.

Das von den unter der Wasseroberfläche verlegten Röhren transportierte Medium unterliegt anderen Temperaturbedingungen als das Umfeld der Röhre. Vor allem in zunehmenden Tiefen spielt der Einfluss niedriger Umgebungstemperatur hinsichtlich der Viskosität des transportierten Mediums eine entscheidende Rolle. Technische Ansätze, um die Viskosität niedrig zu halten bestehen in der Zugabe von speziellen Additiven in das transportierte Medium, was allerdings eine zusätzliche Röhre für den Transport des Additives zum Ort der Einspeisung erfordert.

Alternativ kann die Pipeline mit Hilfe von Temperatur isolierenden Materialien umhüllt werden. Dabei hat die Hülle mehreren Anforderungen zu genügen. Für das Verlegen der Pipeline sollte die Hülle einerseits möglichst flexibel sein, muss auf der anderen Seite allerdings hohen statischen Drücken unter Wasser standhalten. Darüber hinaus ist man bestrebt, die Kosten für einen derartigen Aufbau möglichst im vertretbaren Rahmen zu halten. Aus diesem Grund werden die Röhren mit einer Isolationshülle versehen, die aus mehreren Schichten besteht. Die Isolation der Offshore- Pipeline muss neben mechanischen Einflüssen beim Verlegen und im Betrieb außerdem dauerhaft beständig gegen das Eindringen von Wasser sein. Das Eindringen von Wasser führt zu verminderter Funktion der als thermische Isolation wirkenden Hülle und zu den oben beschriebenen negativen Einflüssen auf das Viskositätsverhalten des transportierten Mediums. Im Extremfall kann es lokal zu Korrosion an der äußeren Wandung der Röhre führen, die auf Dauer ein Versagen der Funktion und einen Austritt des transportierten Mediums in das Wasser bzw. den Eintritt von Wasser in das Medium zur Folge haben kann. Außer den unerwünscht hohen Folgekosten spielen Umweltaspekte hier eine entscheidende Rolle.

Der anfälligste und damit kritische Bereich in Bezug auf Störungen der beschriebenen Art stellen die Verbindungsstücke der Pipelines bzw. deren Isolationshüllen där. Das Anwendungsfeld der beschriebenen Erfindung erstreckt sich in diesem Zusammenhang auf das Gebiet der Herstellung von dauerhaft wasserbeständigen Verbindungselementen für Isolationshüllen von Offshore- Pipelines, so genannten Field Joints.

Der technische Stand für den strukturellen Aufbau einer Isolationshülle von Unterwasser Pipelines ist beispielsweise in US 5,871,034 ausführlich erläutert. Für den kostengünstigen Einsatz werden bituminöse Materialien verwendet, die sich in Schichtungen mit Polymeren verschiedener Eigenschaften abwechseln, um strukturelle Stabilität zu erhöhen. Der bituminöse Werkstoff bildet den eigentlichen thermischen Isolationswiderstand, die Polymerhüllen liegen zur Verstärkung der mechanischen Eigenschaften um diese Hülle verteilt.

Für die Verbindung von Isolationshüllen wurde frühzeitig in US 4,770,444 eine Lösung vorgeschlagen, die auf der gegenseitigen Verschraubung der Enden beruht. Dazu wurden die Enden mit einem weiblichen bzw. männlichen konischen Gewinde versehen. Der konische Aufbau gewährleistet dabei eine gewisse Dichtheit gegenüber Feuchtigkeitseinbrüchen auf Grund von Formschluss.

Den Stand der Technik zur Herstellung sogenannter Field- Joints beschreibt US 6,264,871.

Hier wird genau dargelegt, wie die Enden der Kunststoff Hülle bearbeitet werden müssen, um im Anschluss ein dichtes Gefüge zu erhalten. Die Enden der Isolationshüllen werden dazu winklig angeschnitten, und zwar um den gesamten Umfang herum. Danach werden die Enden auf eine Temperatur von über 70°C aufgeheizt. Das dient dazu, flüssige Bindemittel zu applizierten. Sind nach einer bestimmten Zeit die Bindemittel abreagiert, kann mit dem Auftrag des Füllers begonnen werden. Dieser Füller muss mit dem Bindemittel chemisch reagieren und basiert auf Polyurethan.

Einen alternativen Weg zeigt EP 2 066 959 A1 auf. Dort wird erläutert, wie mit Hilfe einer Manschette die Enden der Isolationshüllen wasserdicht verschlossen werden können. Dieses Verfahren beruht auf dem Eintrag von Hitze und Druck. Das Material wird unter optimalen thermischen Bedingungen in hohen Druckverhältnissen unter die Manschette gespritzt und im Anschluss ausgehärtet.

In ähnlicher Form wird nach US 5,900,195 verfahren. Hier wird beschrieben, wie ein schnellbindendes Polyurethan durch eine speziell angeordnete Öffnung in der Manschette gespritzt wird, und dabei eventuell anwesende Feuchtigkeit an der Oberfläche der Isolationshüllen Enden adsorbieren kann. Das Manschettenmateriel wird hier als Polyethylen (PE) ausgewiesen.

Darüber hinaus wird in US 7,407,197 beschrieben, wie die Oberfläche der Isolationshüllen für diesen Prozess beschaffen sein muss, damit die PE Manschette optimalen Halt erhält. Dazu wird die Oberfläche einem speziellen Kammeraufbau unterzogen.

Um Field Joints vor mechanischen Einflüssen zu schützen, die auf longitudinaler Belastung der Pipeline beruhen, werden in US 4,909,669 Lösungen vorgeschlagen. Dabei helfen Aufbauten aus massivem Kunststoff oder aus hohl ausgeführten Röhren, die den Umfang entlang zwischen die Field Joints und den eigentlichen Isolationshüllen gelegt werden und diese dabei mechanisch entkoppeln.

US 5,328,648 beschreibt eine Methode zur Herstellung von Field Joints, indem die Vergussmasse mit Hilfe einer Gießvorrichtung appliziert wird. Die Gießvorrichtung wird dabei zuvor mit einer bestimmten, nicht bindenden Membran ausgelegt, die vorzugsweise aus Karton oder Pappe besteht.

In US 3,711,124 wird für die Verbindung der Isolationshüllen ebenso Polyurethan (PU) verwendet. Der PU- Schaum wird dabei im Anschluss mit einem Polyethylen Tape umwickelt und thermisch eingeschrumpft. Die Manschette die man dabei erhält wird bei Temperaturen um 170°C erzeugt. Unter die fertige Manschette können zuvor Polyester oder Epoxy- Harze appliziert werden, die mit Glasfiber verstärkt sein können.

Die DE 199 15 311 A1 offenbart eine 7-schichtige Vakuum Isolations-Paneele (VIP) bestehend aus einer mikroporösen Platte als Kernlage und einer Umhüllung aus einer Kunststoffolie aus mindestens 7 Schichten mit der Schichtenfolge:
- Polyolefin-Heißsiegelschicht
- Klebe- oder Verbindungsschicht
- Gasbarriereschicht
- Klebe- oder Verbindungsschicht
- Polyolefinschicht
- Klebe- oder Verbindungsschicht
- und mit Aluminium oder SiOx oder einem Metalloxid der 2. oder 3. Hauptgruppe bedampfte Schicht im Wesentlichen aus Polyester und/oder Polyamid und/oder Polypropylen.
Diese Vakuum Isolations- Paneele kann nicht als Off-shore Isolationselement verwendet werden.

Aus der 10 2005 040 735 A1 ist eine Kunststoffisolierung von Stahlerdgasleitungen zum Korrosionsschutz der Stahlteile in Gewässern bekannt, wobei die Isolierung die Konfiguration PE/SiO2Butyl-kautschukkleber aufweist.

Aus der EP 0 622 181 A1 offenbart ein Tubenlaminat enthaltend wenigstens die Schichten:
- ein Polyethylenfolie einer Dicke von 60 bis 200 µm,
- eine Kaschierung,
- eine Trägerfolie einer Dicke von 8 bis 30 µm, welche mit einer keramischen Nanoschicht versehen ist,
- eine Ionomerschicht in einer Dicvke von 20 bis 40 µm,
- eine Kaschierung und
- eine Polyethylenfolie einer Dicke von 60 bis 200 µm.

Allen bisher bekannten Lösungen gemein ist das Bestreben, die Materialverbunde an den Fugen zwischen der Oberfläche der Isolationshüllen und den Schäumen, Adhesiven, Tapes usw. an den Kontaktstellen zum äußeren Medium, dem Wasser möglichst dauerhaft abzudichten. Realisiert wird dies durch eine chemische Anbindung der eingesetzten Materialien an die Pipelineoberfläche.
Die bekannten technischen Lösungen haben jedoch folgende Nachteile:
- mangelhafte Anbindung der Polyurethanschicht an den PP-Untergrund ohne nass chemische Bindemittel,
- Einsatz nass chemischer Bindemittel ist zeitintensiv, kostenintensiv, nicht umweltfreundlich, schwer zu handhaben (Haltbarkeit des Verbrauchsmittels, thermische Ausheilung usw.),
- auf Grund begrenzter, unzureichender Haftung verbleibendes Risiko für das Eindringen von Wasser in die Fuge zwischen PP Untergrund und PUR- Schicht und
- extrem hohe Wartungs- und Reparaturkosten unter Wasser im Falle mangelnder Haftung und mangelnden Widerstandes gegen Wassereinbruch.

Um bei der Polymerisation beliebiger Kunststoffe eine Haftung des Reaktionsproduktes an eine Oberfläche zu gewährleisten, müssen auf dem Substrat bindungsfähige Gruppen für eine molekulare Vernetzung vorliegen. Im Falle der Anbindung von Polyurethanen an Kunststoffoberflächen werden in der allgemeinen Praxis nass chemische Primer in Form von hoch spezialisierten Bindemitteln eingesetzt (ebenso US 6,264,871). Gestattet die industrielle Herstellung keinen Einsatz von nass chemischen Prozessen, nimmt man mangelhafte Anbindung des Adhesives an den Untergrund in Kauf.
Eine Aufrauung hat der PP Oberflächen hat neben der Erhöhung des Oberflächeninhaltes vor allem den Vorteil, dass man Verschmutzungen von der Oberfläche löst, die sich unter groben industriellen Produktionsbedingungen nicht oder lediglich extrem aufwendig umgehen lassen

Aufgabe der vorliegenden Erfindung ist es, ein Offshore-Isolationselement für Öl- oder Gaspipelines anzugeben, welches die zuvor stehend genannten Nachteile des Standes der Technik vermeiden, insbesondere längere Standzeiten des Offshore- Isolationselements bei deutlich reduziertem Wartung- und Reparaturaufwand ermöglichen. Weiterhin ist es die Aufgabe der vorliegenden Erfindung ein Verfahren zur Herstellung dieses Offshore- Isolationselements für Öl- oder Gaspipelines anzugeben, das aufwandgering realisiert werden kann.

Erfindungsgemäß wird diese Aufgabe durch die kennzeichnenden Merkmale des ersten und fünften Patentanspruchs gelöst. Weitere günstige Ausgestaltungsmöglichkeiten der Erfindung sind in den nachgeordneten Patentansprüchen angegeben.

Das Wesen der Erfindung besteht darin, dass auf die Oberfläche eines Offshore- Isolationselements zur Förderung von Öl oder Gas in Form von gekrümmten Polypropylen- (PP) oder Polyethylen- (PE) Kunststoffsegmenten, insbesondere den jeweiligen Enden der Isolationshüllen, Gussmaterialien auf der Basis von Polyurethanen (PUR) zur Haftung gebracht und ausgehärtet werden, wobei eine dünne Halbleiter- oxidische Schicht eine haftvermittelnde Funktion zwischen dem Polypropylen (PP) oder Polyethylen (PE) und dem Polyurethan (PUR) bewirkt, so dass eine dauerhafte und Feuchte- resistente Verbindung des Polyurethans an den PP- oder PE- Untergrund realisiert wird.

Das Offshore- Isolationselement zur Förderung von Öl oder Gas ist mit einem Verbund aus Polypropylen öder Polyethylen und Polyurethan beschichtet, wobei auf diese Schicht eine dünne Halbleiteroxidschicht aufgebracht ist, über welcher das Polyurethan im Gießverfahren (durch Umsetzung von NCO-reaktiven Gruppen mit NCO- Gruppen) aufgebracht ist.
Die Halbleiter- oxidische Schicht wird dabei in einem Plasma unter Atmosphärendruck und Umgebungstemperatur aufgetragen.
Durch diesen Schichtaufbau werden Wasserdurchbrüche beim Verlegen und im Betrieb der Offshore Pipeline Verbindungsstellen vermieden, die anderenfalls zu Erhöhungen der Viskosität des geförderten Mediums oder zu Korrosion und Kosten aufwendigen Störfällen führen würden.

Der Vorteil der erfindungsgemäßen Off-shore- Isolationselemente ist, dass die Nachteile des Standes der Technik vermieden werden, indem mit Hilfe einer kommerziell verfügbaren Vorrichtung innerhalb von Sekunden eine Halbleiter- oxidische Schicht auf der Kunststoffoberfläche (PP oder PE) abgeschieden wird, und zwar bei atmosphärischen Drücken und Raumtemperatur.
Diese Halbleiter- oxidische Schicht bildet die Grundlage für eine chemische Anbindung von PUR- Werkstoffen. Damit können sowohl erhöhte Haftwerte des PUR- Werkstoffes an seinen PP- oder PE Untergrund erreicht werden, als auch Wasserdurchbrüche bei Dauerbelastung vermieden werden.
Die mit dem erfindungsgemäßen Herstellungsverfahren produzierten Verbindungen für Isolationshüllen ermöglichen damit längere Standzeiten bei deutlich reduziertem Wartungs- und Reparaturaufwand. Die neue technische Lösung umgeht den Einsatz von Lösungsmittel-haltigen Flüssigkeiten.
Der Anwender der vorliegenden Erfindung umgeht die Problematik mit dem Umgang von nass chemischen Bindemitteln. Folgende Gründe sprechen gegen den Einsatz von nass chemischen Bindemitteln:
- begrenzte Lagerfähigkeit,
- problematischer Auftrag,
- Ausheilung der Bindemittel benötigt Zeit,
- massiver Freisatz von Lösungsmitteln in die Atmosphäre und
- hohe Materialkosten.

Die erfindungsgemäße technische Lösung umgeht den energie- und zeitaufwendigen Ausheilprozess von nass chemischen Substanzen, und setzt darüber hinaus keinerlei Lösungsmittel frei. Nach der Halbleiter oxidischen Beschichtung kann sofort im Anschluss mit dem großflächigen Auftrag der Polyurethansubstanzen begonnen werden. Das stellt ein absolutes Novum dar. Der Vorbehandlungsprozess kann direkt in die Fertigung für kontinuierliche Produktion integriert und skaliert werden.
Darüber hinaus ist es mit Hilfe der erfindungsgemäßen Technologie möglich, organische Substanzen in Form von Verunreinigungen von der Kunststoffoberfläche zu entfernen, so dass auf eine Reinigung der Oberfläche verzichtet werden kann, die bei alternativen Vorbehandlungsmethoden notwendig wäre. Sowohl das Verbrauchsmittel als auch der technische Aufwand für den Auftrag der Halbleiter- oxidischen Schicht ist mit vergleichsweise sehr geringen Kosten verbunden. Bei deutlich besseren Haftwerten zwischen Kunststoffoberfläche und Polyurethan sowie verbesserter Resistenz gegen Wassereinbrüche stellt das neue Verfahren eine erheblich wirtschaftlichere Alternative gegenüber dem derzeitigen Stand der Technik dar.

Die Vorteile des erfindungsgemäßen Off-shore- Isolationselements und des Verfahrens zu seiner Herstellung sind:
- schneller, unkomplizierter, reproduzierbarer Fertigungsprozess,
- erheblich verbesserte Haftwerte und Belastungseigenschaften des Isolationselements,
- geringere Kosten für Reparaturen unter Wasser sowie möglicher extremer Folgeschäden sowie
- kein Einsatz von Lösungsmitteln, die in die Atmosphäre abgegeben werden und immer schärferen Umweltauflagen unterliegen.

Die Erfindung wird nachstehend anhand der Zeichnungen und der Ausführungsbeispiele näher erläutert. Es zeigen:
- Fig. 1:: schematische Darstellung eines erfindungsgemäßen Off-shore- Isolationselements (Field Joints),
- Fig. 2:: schematische Darstellung des erfindungsgemäßen Beschichtungsprozesses der Polypropylen- oder Poly-ethylenoberfläche und
- Fig. 3:: schematische Darstellung des erfindungsgemäßen Beschichtungsprozesses segmentierter Polypropylensubstrate.

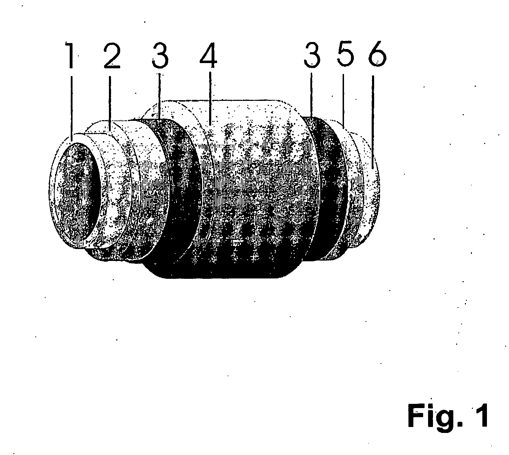

Auf die gekrümmte Kunststoff- (PP oder PE) Oberfläche wird im ersten Schritt eine Halbleiter- oxidische Schicht aufgetragen, die als Haftvermittler wirkt. Das Handling mit Lösungsmittel- haltigen Flüssigkeiten als Haftvermittler und den damit verbundenen Trockenzeiten sowie Umweltbelastungen entfällt.
Die Schicht wird mit Hilfe einer kommerziell erhältlichen Vorrichtung unter Normaldruckbedingungen unter Raumtemperatur abgeschieden. Dabei dient ionisierendes Plasma dazu, flüssige halbleiterorganische Substanzen in der Plasmazone zu zersetzen und das freie, bindungsfähige Halbleiterion sowohl im Plasma selbst als auch an der Oberfläche der behandelten Werkstoffe oxidisch zu vernetzen.
Die Schichteigenschaften lassen sich durch die verwendeten Parameter steuern.
Im zweiten Schritt wird ein Polyurethan- (PUR) Werkstoff auf die derartig präparierte Oberfläche aufgetragen. Nach dem Ausheilen des Polyurethanes auf Basis der Umsetzung von NCO- reaktiven Gruppen mit NCO Gruppen haftet dieses fest an der so präparierten PE- oder PP-Oberfläche an. Das fertige Produkt dieser einzelnen Verfahrensschritte ist in Fig. 1 dargestellt.
Das Ende des isolierten Rohres (1) und dessen äußerster Hülle (2), die aus PP oder PE besteht, ist mit der Halbleiter- oxidischen Schicht (3) beschichtet. An diese Schicht ist das PUR (4) angebunden.

Die Halbleiter- oxidische Schicht (3) stellt das Bindeglied zur darauf aufgetragenen Polyurethanschicht (4) dar. Unter dem PUR- Mantel (4) folgt der Anschluss an das folgende PP- oder PE- Isolationselement (5) bzw. das darunter liegende folgende isolierte Rohrende (6), welches mit dem medienführenden Teil (1) verschweißt ist. Die Schweißnaht wird dabei durch das in sich geschlossene PUR (4) komplett umhüllt. Ein Eindringen von Wasser kann lediglich über die Grenzfläche zwischen den beiden PP- oder PE- Elementen (2) bzw. (5) an deren Grenzflächen zum PUR (4) stattfinden. Diese Grenzfläche wird an jedem Punkt durch die Halbleiter- oxidische Schicht (3) realisiert, welche eine chemische Kopplung zwischen (4) und (2) bzw. (5) bewerkstelligt und damit das Eindringen von Feuchtigkeit komplett unterbindet.

Die Halbleiter- oxidische Schicht (3) wird durch Einsatz eines atmosphärischen Beschichtungsverfahrens mit Hilfe einer kommerziell erhältlichen Apparatur bei Raumtemperatur hergestellt. Die Erhöhung der Oberflächentemperatur des behandelten Werkstückes beschränkt sich dabei auf wenige Kelvin. Dabei wird dem aus der Emissionsquelle (7) für das ionisierende Plasma (8) austretenden Gasgemisches zuvor eine Halbleiter organische Substanz beigemischt, die sich nach dem Verlassen der Emissionsquelle (7) für das ionisierende Plasma (8) im Plasmavolumen (8) zu Halbleiter- oxidischen Partikeln umsetzt. Der Umsatz zu diesen Partikeln erfolgt dabei ab der Mündung (9) der Emissionsquelle (7) des Plasmavolumens (8).

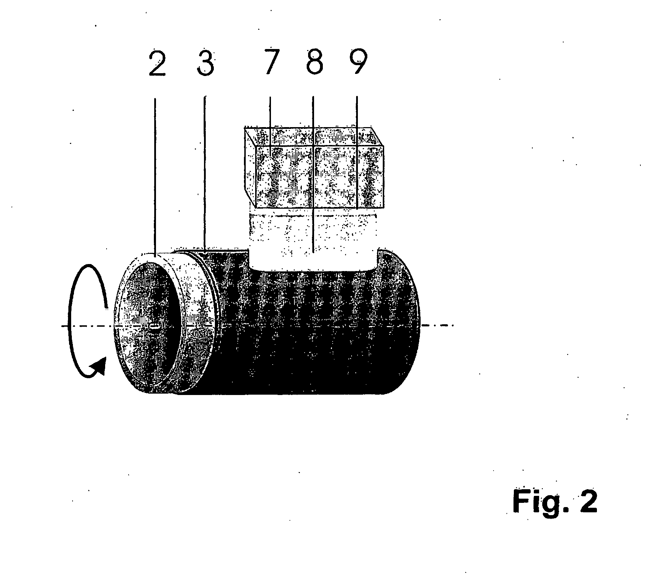

Zum Beschichten wird die zu behandelnde Oberfläche der PP- oder PEoberfläche (2) bzw. (5) wie in Fig. 2 dargestellt dem Plasmavolumen (8) ausgesetzt, die sich mit einer definierten Umfanggeschwindigkeit zwischen 30 m/h und 4000 m/h, bevorzugt 500 m/h, über die Oberfläche des PP oder PE (2) bzw. (5) bewegt. An der Oberfläche der PP- oder PE-Außenschale (2) bzw. (5) des isolierten Rohrendes (1) bzw. (6) kommt es zu einer Vernetzung der Halbleiter oxidischen Partikel zu einer oxidischen Schicht (3). Der Abstand von der Emissionsquelle für das ionisierende Plasma (7) zur PP- oder PE- Oberfläche (2) bzw. (5) kann dabei zwischen 3 mm und 200 mm variieren. Bevorzugte Abstände liegen zwischen 3 mm und 50 mm.
Verfahrenstechnisch kann sich dabei entweder die PP- oder PE-Oberfläche (2) bzw. (5) um ihre Achse drehen, wobei das Plasmavolumen (8) und die Emissionsquelle für das ionisierende Plasma (7) fixiert sind, oder die Emissionsquelle für das ionisierende Plasma (7) führt das Plasmavolumen (8) um die PP- oder PE- Oberfläche (2) bzw. (5) herum. In diesem Prozess wird im ersten Fall dann die Emissionsquelle für das ionisierende Plasma (7) der Länge nach dem sich drehenden PP- oder PE- Substrat (2) bzw. (5) entlang geführt. Im zweiten Fall wird das PP- oder PE- Substrat (2) bzw. (5) an der bewegten Emissionsquelle für das ionisierende Plasma (7) entlang geführt. Hierbei kann die rotierende Bewegung der Emissionsquelle für das ionisierende Plasma (8) auch oszillierend ausgeführt werden.

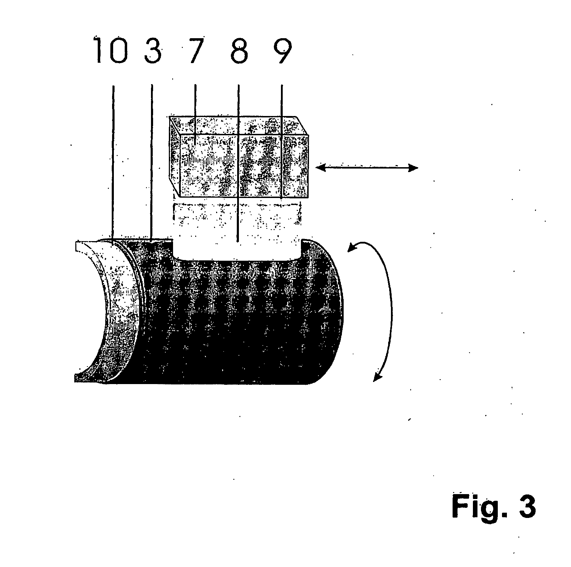

Weiterhin kann die Emissionsquelle für das ionisierende Plasma (7) auch über teilweise oder ganz segmentierte Bereiche (10) des PP- oder PE-Substrates (2) bzw. (5) geführt werden, bzw. diese Segmente (10) an der Emissionsquelle für das ionisierende Plasma (7) vorbei, wie es in Figur 3 dargestellt ist.
Im Anschluss an diesen Schritt erfolgt der Auftrag des Polyurethans (4), welches an der Halbleiter- oxidischen Schicht (3) zu einem festen Polymer in beschriebener Weise vernetzt. Nach dem Ausheilen des Polyurethanes (4) auf Basis der Umsetzung von NCO- reaktiven Gruppen mit NCO Gruppen haftet die PUR Schicht (4) fest an der mit der Halbleiter oxidischen Schicht (3) präparierten PP- oder PE-Oberfläche (2) bzw. (5) oder deren Segmenten (10) an.
Die Haftung beruht dabei auf einer chemischen Kopplung, die unter Einfluss von Wasser bzw. Salzwasser nicht reversibel ist. Das Eindringen von Feuchtigkeit in die Fuge zwischen (4) und (2) bzw. (5) ist dadurch auf Dauer verhindert.
Alle in der Beschreibung, dem Ausführungsbeispiel und den nachfolgenden Ansprüchen dargestellten Merkmale können sowohl einzeln als auch in beliebiger Kombination miteinander erfindungswesentlich sein.

### Bezugszeichen

- 1: - Rohr
- 2: - PP- oder PE-Element
- 3: - Halbleiter- oxidische Schicht
- 4: - PUR- Schicht
- 5: - folgendes PP- oder PE- Isolationselement
- 7: - Emissionsquelle für ionisierendes Plasma
- 8: - ionisierendes Plasmavolumen
- 10: - segmentierte Bereich

## Patentansprüche

1. Off-shore- Isolationselement zur Förderung von Öl und Gas, bestehend aus einem Verbund aus Polypropylen oder Polyethylen und Polyurethan **dadurch gekennzeichnet, dass** sich eine Halbleiteroxidische Schicht zwischen dem Polypropylen oder Polyethylen und dem Polyurethan befindet.

2. Off-shore-Isolationselement gemäß Anspruch 1, **dadurch gekennzeichnet, dass** die Dicke der Halbleiter- oxidischen Schicht bis 200 nm beträgt.

3. Off-shore-Isolationselement gemäß Anspruch 1, **dadurch gekennzeichnet, dass** die Dicke der Halbleiter- oxidischen Schicht 2 nm bis 50 nm beträgt.

4. Off-shore- Isolationselement gemäß Anspruch 1, **dadurch gekennzeichnet, dass** die Halbleiter- oxidische Schicht auf Si oder Ge basiert.

5. Verfahren zur Herstellung eines Off-shore- Isolationselements gemäß einem oder mehrerer der voranstehenden Ansprüche, bei dem die Halbleiter- oxidische Schicht unter Atmosphärendruck und Umgebungstemperatur auf die Polypropylen- oder Polyethylen-Oberfläche aufgetragen wird und anschließend auf der Halbleiteroxidischen Schicht Polyurethan im Gießverfahren durch Umsetzung von NCO-reaktiven Gruppen mit NCO Gruppen erhalten wird.

6. Verfahren zur Herstellung eines Off-shore- Isolationselements gemäß Anspruch 5, **dadurch gekennzeichnet, dass** die Polypropylen- oder Polyethylen- Oberfläche gegenüber einer festen Emissionsquelle für ionisierendes Plasma bewegt wird.

7. Verfahren zur Herstellung eines Off-shore- Isolationselements gemäß Anspruch 5, **dadurch gekennzeichnet, dass** um die Polypropylen- oder Polyethylen- Oberfläche eine Emissionsquelle für ionisierendes Plasma bewegt wird.

8. Verfahren zur Herstellung eines Off-shore- Isolationselements gemäß Anspruch 6 oder 7, **dadurch gekennzeichnet, dass** die Emissionsquelle für ionisierendes Plasma in Form von Corona, Flamme, Lichtbogen oder HV- Remoteplasma verwendet wird.

## Claims

1. Offshore insulating element for extracting oil and gas, which consists of a composite of polypropylene or polyethylene and polyurethane, wherein a semiconductor oxidic layer is located between the polypropylene or polyethylene and the polyurethane.

2. Offshore insulating element according to claim 1, wherein the thickness of the semiconductor oxidic layer is up to 200 nm.

3. Offshore insulating element according to claim 1, wherein the thickness of the semiconductor oxidic layer ranges from 2 nm to 50 nm.

4. Offshore insulating element according to claim 1, wherein the semiconductor oxidic layer is based on Si or Ge.

5. Method for producing an offshore insulating element according to one or several of the previous claims, in which the semiconductor oxidic layer is applied to the polypropylene or polyethylene surface at atmospheric pressure and ambient temperature, and then polyurethane is obtained on the semiconductor oxidic layer in a casting process by reacting NCO-reactive groups with NCO groups.

6. Method for producing an offshore insulating element according to claim 5, wherein the polypropylene or polyethylene surface is moved relative to a fixed emission source for ionising plasma.

7. Method for producing an offshore insulating element according to claim 5, wherein an emission source for ionising plasma is moved around the polypropylene or polyethylene surface.

8. Method for producing an offshore insulating element according to claim 6 or 7, wherein the emission source for ionising plasma in form of a corona, flame, arc or HV-remote plasma is used.

## Revendications

1. Elément isolant pour l'installation en mer pour les pipelines de pétrole ou de gaz qui se compose d'un matériau composite en polypropylène ou polyéthylène et polyuréthane est **caractérisé en ce qu'**une couche en oxyde semi-conducteur se trouve entre le polypropylène ou polyéthylène et le polyuréthane.

2. Elément isolant pour l'installation en mer suivant la revendication 1 est **caractérisé en ce que** l'épaisseur de la couche en oxyde semi-conducteur s'élève au maximum à 200 nm.

3. Elément isolant pour l'installation en mer suivant la revendication 1 est **caractérisé en ce que** l'épaisseur de la couche en oxyde semi-conducteur est de 2 nm à 50 nm.

4. Elément isolant pour l'installation en mer suivant la revendication 1 est **caractérisé en ce que** l'épaisseur de la couche en oxyde semi-conducteur est à base de Si ou Ge.

5. Procédé pour la fabrication d'un élément isolant pour l'installation en mer suivant une ou plusieurs des revendications précédentes pendant lequel la couche en oxyde semi-conducteur est appliquée sur la surface en polypropylène ou polyéthylène sous pression atmosphérique et température ambiante et le polyuréthane est appliqué ensuite sur la couche en oxyde semi-conducteur par coulée obtenue par mise en réaction des groupes réactifs NCO avec des groupes NCO.

6. Procédé pour la fabrication d'un élément isolant pour l'installation en mer suivant la revendication 5 est **caractérisé en ce que** la surface en polypropylène ou polyéthylène se meut par rapport à une source émettrice fixe pour plasma ionisant.

7. Procédé pour la fabrication d'un élément isolant pour l'installation en mer suivant la revendication 5 est **caractérisé en ce qu'**une source émettrice fixe pour plasma ionisant se meut autour de la surface en polypropylène ou polyéthylène.

8. Procédé pour la fabrication d'un élément isolant pour l'installation en mer suivant les revendications 6 ou 7 est **caractérisé en ce que** la source émettrice fixe est utilisée pour le plasma ionisant sous forme de corona, flamme, arc électrique ou plasma HT à distance.
